# EUROPEAN PATENT SPECIFICATION

(11) **EP 3 593 273 B1**
(45) Date of publication and mention of the grant of the patent: **20.09.2023**
(21) Application number: 18716661.6
(22) Date of filing: 09.03.2018
(51) Int. Cl.: G06K 7/10

(54) **INVENTORY TRACKING SYSTEM**
BESTANDSVERFOLGUNGSSYSTEM
SYSTÈME DE SUIVI D'INVENTAIRE

(30) Priority: 10.03.2017 AU 2017900839
(43) Date of publication of application: 15.01.2020
(73) Proprietor: Sato Holdings Kabushiki Kaisha, Tokyo 153-0064 (JP)
(72) Inventor: MURDOCH, Graham, St Peters, New South Wales 2044 (AU)
(74) Representative: Grünecker Patent- und Rechtsanwälte PartG mbB
(86) International application number: PCT/IB2018/051534
(87) International publication number: WO 2018/163110

(56) References cited:
- US-A- 5 473 110
- US-A1- 2006 022 827
- US-A1- 2012 229 258
- US-A1- 2015 115 029

## Description

### Technical Field

The present disclosure relates, generally, to inventory tracking and, more particularly, to receptacles or containers used for radio frequency inventory tracking.

### Background

Conventionally, tracking the inventory of items stored in a cupboard or on a shelf typically comprises manually checking each item, for example by unpacking the cupboard or shelf. To restock used items, remaining items are checked against a list of required items and then supplemented. In the case of medical transportation trolleys, for example as used in operating theatres to store surgical items, following surgery the trolleys are typically unpacked and repacked to ensure that all required items are present for a following use.

One way to facilitate inventory tracking and restocking is to attach electronic tags to items that can be read by an electronic reader, for example RFID tags that can be read by an RFID reader. RFID enabled containers or cupboards, however, can be costly.
Document US 2006/0022827 A1 describes an RFID cabinet for monitoring items having RFID tag. An RFID detector for monitoring each item placed within the cabinet is located within the interior of the cabinet. The cabinet is manufactured of a metal to contain the RFID field inside the cabinet and a lockable door comprises a transparent material that is coated with a metallic mesh so as to confine the RFID field.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Summary

RFID enabled containers tend to be costly not only due to the electronics required on the receptacle (for example the antennas in the body and/or shelving of the receptacle, as well as the reader that processes the antenna signals), but also due to the metal walls and doors required to provide electromagnetic shielding for the electronics. Electromagnetic shielding is used so that interfering signals do not compromise the accuracy of the readings provided by the RFID reader.
The present invention is defined by the features of the independent claims.

Accordingly, in one aspect there is provided a mobile receptacle comprising: a structure defining a volume; at least one shelf for holding electronically labelled items, the shelf being arranged within the volume of the structure; at least one antenna associated with the at least one shelf; and a flexible electromagnetic shield associated with the structure and configured to inhibit electromagnetic interference at the at least one antenna. The electromagnetic shield comprises a flexible metallic fabric and enshrouds the structure.

The structure may comprise a frame that supports the at least one shelf.

The flexible metallic fabric may comprise a material selected from the group consisting of: metal woven mesh, metal film, metal coated fibres, silver coated nylon, silver coated rayon, copper coated nylon, and combinations of thereof. The electromagnetic shield forms part of a dust cover. The dust cover enshrouds the structure. The dust cover defines an access opening to gain access to the volume of the structure, the access opening being closed by a displaceable panel of the dust cover. The displaceable panel is conductively fastened to adjacent panels of the dust cover when in a closed position.

The at least one antenna may comprise two or more independent antenna coils. The receptacle may then further comprise a first multiplexer that interfaces with the two or more antenna coils. The receptacle may also comprise at least two shelves; at least one antenna associated with each shelf; and an antenna interface configured to interface with an electronic reader via a second multiplexer that sequentially interrogates the antennas via the antenna interface. The receptacle may also comprise the second multiplexer. The antenna interface may be configured: to receive a read signal from the electronic reader when the antenna interface is in communication with the electronic reader, and to provide the read signal to each antenna so that the electronically labelled items on the shelf associated with that antenna are read for identification.

The receptacle may further comprise the electronic reader.

The receptacle may further comprise a power interface for receiving power from an external power supply when the electronically labelled items are read for identification.

The structure is a mobile structure. The structure may be mounted on a wheeled base.

In another aspect there is provided an inventory tracking system comprising: a mobile receptacle comprising: a structure defining a volume; at least one shelf for holding electronically labelled items, the shelf being arranged within the volume of the structure; at least one antenna associated with the at least one shelf; a flexible electromagnetic shield associated with the structure and configured to inhibit electromagnetic interference at the at least one antenna; and a first electrical interface; wherein the electromagnetic shield comprises a flexible metallic fabric and enshrouds the structure. The inventory tracking system further comprises a docking station comprising: a second electrical interface for interfacing with the first electrical interface; an electronic reader configured to receive read signals from the at least one antenna; and a power source for providing power to at least the mobile receptacle. The docking station may include an antenna multiplexer.

In another aspect there is provided a method of inventory tracking, the method comprising: providing a mobile receptacle for holding electronically labelled items, the mobile receptacle containing at least one antenna; positioning a flexible electromagnetic shield comprising a flexible metallic fabric to enshroud the mobile receptacle and the at least one antenna, and then: activating the at least one antenna to interrogate the electronically labelled items to generate an antenna signal; providing the antenna signal to an electronic reader that is separate from the mobile receptacle; and reading the antenna signal to determine an inventory of the mobile receptacle.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Embodiments of the disclosure are now described by way of example with reference to the accompanying drawings in which:-
Figure 1 is a perspective view of an embodiment of a receptacle;
Figure 2 is a schematic representation of an embodiment of an inventory tracking system; and
Figure 3 is a diagram of a method of inventory tracking.

In the drawings, like reference numerals designate similar parts.

### Description of Embodiments

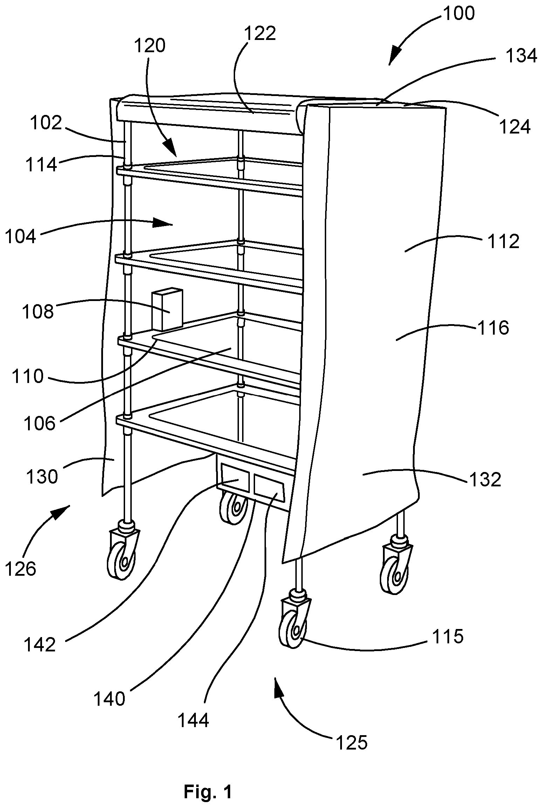

Figure 1 of the drawings shows an embodiment of a receptacle 100 that has a structure 102 defining a volume 104. At least one shelf 106 for holding electronically labelled items 108 is arranged within the volume 104 of the structure 102. At least one antenna 110 is associated with the shelf 106. The receptacle 100 has a flexible electromagnetic shield 112 that is associated with the structure 102, and that is configured to inhibit electromagnetic interference at the, or each, antenna 110.

In the embodiment shown in Figure 1, the receptacle 100 is in the form of a mobile trolley. However, as used herein the term "receptacle" is understood to mean any type of trolley, shelf, cabinet, table, container, repository or other structure that has one or more surfaces, areas or zones that can carry, hold, support, store or otherwise receive a labelled item. The structure 102 has a frame 114 which may be made of a conductive or non-conductive material. The frame 114 includes a wheeled base, and the wheels may be, for example, castors 115.

Suspended from a floor 125 of the frame 114 is a processing unit 140 that includes an electronic reader 142 in communication with the at least one antenna 110. For embodiments that include multiple antennas (for example in a trolley 100 that includes multiple shelves, as shown in Figure 1), the processing unit 140 also includes a multiplexer 144. The multiplexer 144 multiplexes signals to and from the antennas 110 when the antennas 110 for the shelves 106 are individually activated during inventory checking.

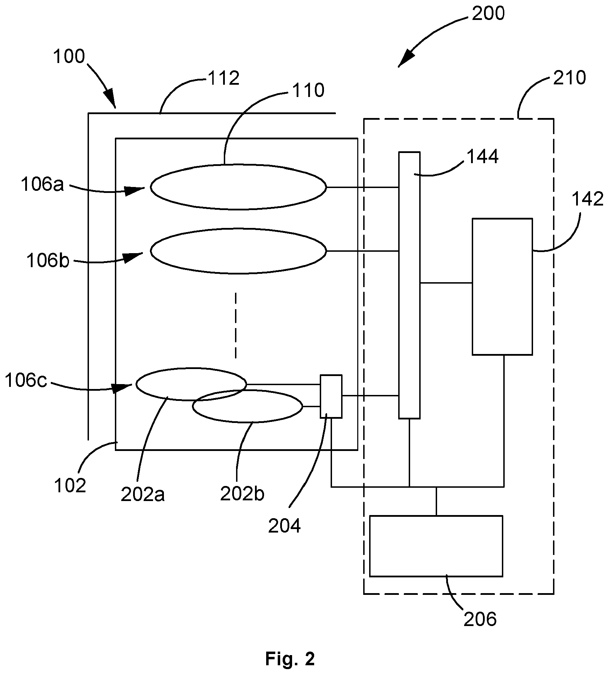

In other embodiments, the processing unit 140 or the electronic reader 142 may be separate from the trolley 100. In such embodiments, the processing unit 140 or electronic reader 142 may be provided at a docking station used when inventory is checked (see the description elsewhere herein with reference to Figure 2). In some embodiments one processing unit 140, electronic reader 142, or docking station may be used to check the inventory of more than one trolley 100. This may be done concurrently or one after the other, depending on the specific configuration of the inventory tracking system, as described in more detail elsewhere herein with reference to Figure 2.

The flexible electromagnetic shield 112 in the embodiment shown in Figure 1 forms part of a dust cover 116. The shield 112 is made at least in part from a flexible, metallic or metal coated fabric, for example metal woven mesh, metal film, metal coated fibres, silver coated nylon, silver coated rayon, copper coated nylon, or the like. The dust cover 116 has panels providing shielding on at least two sides of the trolley 100, but typically providing shielding on all four sides and over a roof or top 124 of the trolley 100. In some embodiments the dust cover 116 can also provide shielding under the floor 125 of the trolley 100. The dust cover 116 also includes an access opening openable on one or more sides of the dust cover 116. In this example the access opening 120 is provided by a door panel 122 in the form of a flap. In Figure 1 the door panel 122 is shown open at a front 126 of the trolley 100, and is folded back over the roof 124 of the trolley 100. In the closed position, the door panel 122 is fastened to adjacent panels 130, 132 on the left and right respectively, and fastened or continuous with the roof panel 134 to ensure a substantially continuous screening effect.

In some embodiments, fastening of the panels, such as the door panel 122, is done using conductive fasteners, such as metal clasps or zippers (not shown). This is done in such a way that only small openings or slits remain in the shield 112 when the shield 112 is closed. For long wavelength systems as used with RFID technology, small slits between panels are typically 10 cm, or shorter, so as to avoid excessive nearfield emission.

In the embodiment shown in Figure 1, the shield 112 hangs over the frame 114, shielding the four sides of the frame 114 and the roof 124. The shield 112 may be attached to the frame, forming part of the receptacle. Where the frame 114 is conductive, the shield 112 may be connected at one or more contact points to the frame 114. This may provide some advantage in shield operation.

In this embodiment, the dust cover 116 is also removable, and can be lifted off of the trolley completely when not required. In other embodiments, the shield 112 may be provided separately from the frame 114, for example in the form of a detachable curtain that can be attached to the structure on one or more sides. In still other embodiments, the shield 112 may be provided in the form of a separate curtain, for example suspended from a curtain rail so that when the receptacle is positioned at the curtain rail, the separate curtain comprising the shield may be drawn around two or more sides of the receptacle.

The shield 112 is used to provide electromagnetic shielding while the antennas 110 are operating. Electromagnetic shielding is essential to the operation of the electronics so that external interference signals do not compromise the accuracy of the readings provided by the RFID reader. Electromagnetic shielding is also required to avoid both co-interference (i.e. crosstalk that can result from an antenna in a different receptacle operating at the same frequency) as well as cross-reading (i.e. an antenna reading an electronic tag present in another receptacle).

Figure 2 of the drawings shows a schematic representation of an embodiment of an inventory tracking system 200. The system 200 includes a trolley 100, for example as described with reference to Figure 1, and a docking station 210 which is able to be communicatively coupled to the trolley 100 for inventory tracking. As illustrated, the trolley 100 has multiple shelves 106a, 106b, 106c, each with its own antenna 110. Some of the shelves 106a, 106b, 106c may include more than one antenna as shown for shelf 106c where antenna coil 202a and antenna coil 202b are provided, for example in order to cover a larger area and/or to provide two or three dimensional operation about the shelf 106c. Where more than one antenna coil is provided on a shelf, a first multiplexer 204 is provided per shelf to multiplex between the antenna coils on that shelf. The first multiplexer 204 typically forms part of the antenna combination on the shelf, so that the multiplexer 204 would be provided as part of the trolley 100. A second multiplexer 144 is used to multiplex the antenna signals received from the different shelves 106. In the embodiment illustrated in Figure 2, the second multiplexer is separate from the trolley 100 and forms part of the docking station 210. This is in contrast to the embodiment illustrated in Figure 1, where the multiplexer 144 is carried on the trolley 100.

In this embodiment, the trolley 100 has an antenna interface (not shown) that is configured to interface with the electronic reader 142 via the second multiplexer 144. The second multiplexer 114 sequentially interrogates the antennas 110 via the antenna interface.

In some embodiments, the antenna interface is configured to receive a read signal from the electronic reader 142 when the antenna interface is in communication with the electronic reader 142, and to provide a read signal to each antenna 110 so that the electronically labelled items 108 are read by the relevant antenna 110 for identification.

As shown in Figure 2, the docking station 210 also includes the electronic reader 142 as well as a power supply 206 that provides power to the trolley 100 and one or more parts of the docking station 210.

In some embodiments, the antennas 110 and/or coils 202a, 202b are part of the docking station 210. In such embodiments, the trolley 100 may or may not include any antennas. When the trolley 100 is docked at the docking station the antennas 110 and/or coils 202a, 202b are positioned in, beside, around or otherwise proximate the trolley and/or trolley shelves so that the tagged items 108 on the trolley shelves are within a reading range of the antennas 110 and/or coils 202a, 202b. The coils 202a, 202b are connected to a first multiplexer 204, and the antenna 110 and first multiplexer 204 are connected to a second multiplexer 144. The second multiplexer 144 sequentially interrogates the antenna 110 and first multiplexer 204. The second multiplexer 144 communicates with the electronic reader 142. The docking station 210 also includes a power supply 206 that provides power to the one or more parts of the docking station 210.

In embodiments where the shield 112 is provided in the form of a separate curtain, the shield 112 may be part of or be associated with the docking station instead of with the trolley 100. One example is the provision of a docking station within an electromagnetic shield (such as a flexible curtain, a flexible dust cover, or a metal-walled cubicle) so that the trolley 100 is shielded when positioned at the docking station and within the electromagnetic shield. In some embodiments, the electromagnetic shield may be configured to include multiple compartments so that a receptacle may be positioned in each of the separate compartments of a compartmentalised electromagnetic shield. Each compartment may include its own docking station. Additionally or alternatively the compartments may share a docking station, with each receptacle in a separate compartment checked for inventory one at a time by the same docking station. In some embodiments, the docking station may include more than one electronic reader so that the docking station is configured to receive and check the inventory of more than one trolley at a time.

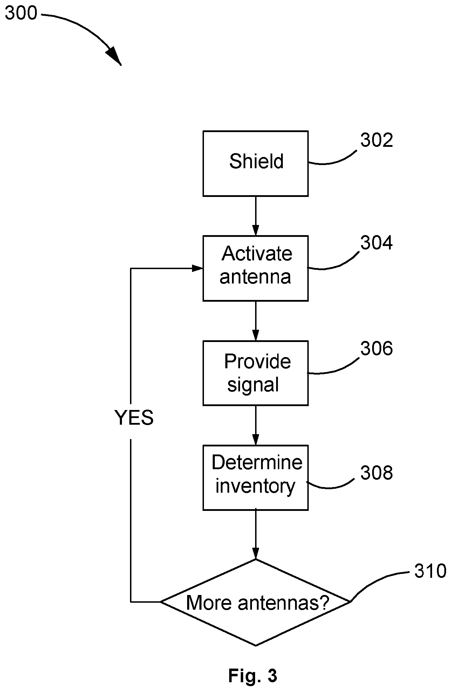

Figure 3 illustrates diagrammatically a method 300 of inventory tracking. At 302 a flexible electromagnetic shield 112 is positioned around at least part of the trolley 100 with the at least one antenna 106. When the shield 112 is in position, at 304 an antenna 106 is activated to interrogate the electronically labelled items 108 on a shelf 106 of the trolley 100, generating an antenna signal.

At 306 the antenna signal is provided to the electronic reader 142, and at 308 the antenna signal is read to determine the inventory of that shelf 106 of the trolley 100 associated with the antenna 110. In embodiments where multiple antennas are used, at 310 one or more antenna multiplexers are used so that one antenna signal is read at a time, thereby generating a series of antenna signals from the antennas, the series of antenna signals then being provided to the electronic reader 142.

Using a flexible electromagnetic shield as described herein enables the use of a low cost receptacle while still providing the electromagnetic shielding required to avoid both co-interference as well as cross-reading.

The use of a docking station further contributes to lowering the cost of the receptacles used as resources are shared amongst multiple receptacles. Some of the hardware required for inventory tracking (such as the electronic reader, antenna multiplexer, antenna or antenna components, and/or power supply) can be centralised and shared for multiple receptacles. In some embodiments, a separate electromagnetic shield provided, for example, as a suspended curtain or metal-walled cubicle at the docking station may further reduce the cost of the receptacles.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

## Claims

1. A mobile receptacle (100) comprising:
a structure (102) defining a volume (104);
at least one shelf (106) for holding electronically labelled items (108), the shelf being arranged within the volume of the structure;
at least one antenna (110) associated with the at least one shelf (106);
the mobile receptacle comprises a flexible electromagnetic shield (112) associated with the structure (102) and configured to inhibit electromagnetic interference at the at least one antenna (110), wherein the electromagnetic shield comprises a flexible metallic fabric and enshrouds the structure,
**characterised in that**
the electromagnetic shield (112) forms part of a dust cover (116) that defines an access opening (120) to gain access to the volume of the structure, the access opening being closed by a displaceable panel (122) of the dust cover, and
the displaceable panel (122) is conductively fastened to adjacent panels (130, 132) of the dust cover (116) when in a closed position.

2. The receptacle of claim 1, in which the structure (102) comprises a frame (114) that supports the at least one shelf (106).

3. The receptacle of claim 1 or 2, wherein the flexible metallic fabric comprises a material selected from the group consisting of: metal woven mesh, metal film, metal coated fibres, silver coated nylon, silver coated rayon, copper coated nylon, and combinations of thereof.

4. The receptacle of any one of the preceding claims, wherein the at least one antenna (110) comprises two or more independent antenna coils (202).

5. The receptacle of claim 4, further comprising a first multiplexer (204) that interfaces with the two or more antenna coils (202).

6. The receptacle of claim 5, further comprising:
at least two shelves (106); antennas where at least one antenna (110) is associated with a shelf of the at least two shelves (106); and
an antenna interface configured to interface with an electronic reader (142) via a second multiplexer (144) that sequentially interrogates the antennas of the at least two shelves (106).

7. The receptacle of claim 6, further comprising the second multiplexer (144).

8. The receptacle of claim 6 or 7, wherein the antenna interface is configured:
to receive a read signal from the electronic reader (142) when the antenna interface is in communication with the electronic reader, and
to provide the read signal to each antenna so that the electronically labelled items on the shelf associated with that antenna are read for identification.

9. The receptacle of any one of the preceding claims further comprising a power interface for receiving power from an external power supply (206) when the electronically labelled items are read for identification.

10. An inventory tracking system (200) comprising:
a mobile receptacle (100) comprising:
a structure (102) defining a volume (104);
at least one shelf (106) for holding electronically labelled items (108), the shelf being arranged within the volume of the structure;
at least one antenna (110) associated with the at least one shelf; and
a first electrical interface;
the mobile receptacle (100) comprises a flexible electromagnetic shield (112) associated with the structure (102) and configured to inhibit electromagnetic interference at the at least one antenna (110). wherein the electromagnetic shield (112) comprises a flexible metallic fabric and enshrouds the structure (102) ,
**characterised in that**
the electromagnetic shield (112) forms part of a dust cover (116) that defines an access opening (120) to gain access to the volume of the structure, the access opening being closed by a displaceable panel (122) of the dust cover, and
the displaceable panel (122) is conductively fastened to adjacent panels (130, 132) of the dust cover (116) when in a closed position; and
the inventory tracking system comprises a docking station (210) comprising:
a second electrical interface for interfacing with the first electrical interface;
an electronic reader (142) configured to receive read signals from the at least one antenna; and
a power source (206) for providing power to at least the mobile receptacle.

11. A method of inventory tracking, the method comprising:
providing a mobile receptacle (100) for holding electronically labelled items (108), the mobile receptacle containing at least one antenna (110);
the method further comprises:
positioning a flexible electromagnetic shield (112) comprising a flexible metallic fabric to enshroud the mobile receptacle (100) and the at least one antenna (110), and then: activating the at least one antenna (110) to interrogate the electronically labelled items (108) to generate an antenna signal;
providing the antenna signal to an electronic reader (142) that is separate from the mobile receptacle (100); and
reading the antenna signal to determine an inventory of the mobile receptacle, wherein
the electromagnetic shield (112) forms part of a dust cover (116) that defines an access opening (120) to gain access to the volume of the structure, the access opening being closed by a displaceable panel (122) of the dust cover, and
the displaceable panel (122) is conductively fastened to adjacent panels (130, 132) of the dust cover (116) when in a closed position.

## Patentansprüche

1. Mobiles Behältnis (100), mit:
einer Struktur (102), die ein Volumen (104) definiert;
mindestens einem Fach (106) zur Aufnahme elektronisch etikettierter Gegenstände (108), wobei das Fach innerhalb des Volumens der Struktur angeordnet ist;
mindestens einer Antenne (110), die dem mindestens einen Fach (106) zugeordnet ist;
wobei das mobile Behältnis eine flexible elektromagnetische Abschirmung (112) aufweist, die der Struktur (102) zugeordnet und ausgebildet ist, elektromagnetische Störungen an der mindestens einen Antenne (110) zu unterdrücken, wobei die elektromagnetische Abschirmung ein flexibles Metallgewebe aufweist und die Struktur umhüllt,
**dadurch gekennzeichnet, dass**
die elektromagnetische Abschirmung (112) einen Teil einer Staubabdeckung (116) bildet, die eine Zugangsöffnung (120) definiert, um Zugang zu dem Volumen der Struktur zu erhalten, wobei die Zugangsöffnung durch eine verschiebbare Platte (122) der Staubabdeckung verschlossen ist, und
die verschiebbare Platte (122) leitend an benachbarten Platten (130, 132) der Staubabdeckung (116) befestigt ist, wenn sie sich in einer geschlossenen Position befindet.

2. Behältnis nach Anspruch 1, wobei die Struktur (102) einen Rahmen (114) aufweist, der das mindestens eine Fach (106) trägt.

3. Behältnis nach Anspruch 1 oder 2, wobei das flexible Metallgewebe ein Material aufweist, das aus der Gruppe ausgewählt ist, die besteht aus: Metallgewebe, Metallfolie, metallbeschichteten Fasern, silberbeschichtetem Nylon, silberbeschichtetem Rayon, kupferbeschichtetem Nylon und Kombinationen davon.

4. Behältnis nach einem der vorhergehenden Ansprüche, wobei die mindestens eine Antenne (110) zwei oder mehr unabhängige Antennenspulen (202) aufweist.

5. Behältnis nach Anspruch 4, das ferner einen ersten Multiplexer (204) aufweist, der mit den zwei oder mehr Antennenspulen (202) verbunden ist.

6. Behältnis nach Anspruch 5, das ferner aufweist:
mindestens zwei Fächer (106);
Antennen, wobei mindestens eine Antenne (110) einem Fach der mindestens zwei Fächer (106) zugeordnet ist; und
eine Antennenschnittstelle, die ausgebildet ist, über einen zweiten Multiplexer (144), der die Antennen der mindestens zwei Fächer (106) sequentiell abfragt, mit einem elektronischen Lesegerät (142) zu verbinden.

7. Behältnis nach Anspruch 6, das ferner den zweiten Multiplexer (144) aufweist.

8. Behältnis nach Anspruch 6 oder 7, wobei die Antennenschnittstelle ausgebildet ist:
ein Lesesignal von dem elektronischen Lesegerät (142) zu empfangen, wenn die Antennenschnittstelle mit dem elektronischen Lesegerät in Verbindung steht, und
das Lesesignal jeder Antenne zuzuführen, derart, dass die elektronisch etikettierten Gegenstände auf dem Fach, das dieser Antenne zugeordnet ist, zur Identifizierung gelesen werden.

9. Behältnis nach einem der vorangehenden Ansprüche, das ferner eine Stromversorgungsschnittstelle zur Aufnahme von Strom von einer externen Stromversorgung (206) aufweist, wenn die elektronisch etikettierten Gegenstände zur Identifizierung gelesen werden.

10. Bestandsverfolgungssystem (200), mit:
einem mobilen Behältnis (100) mit:
einer Struktur (102), die ein Volumen (104) definiert;
mindestens einem Fach (106) zur Aufnahme von elektronisch gekennzeichneten Gegenständen (108), wobei das Fach innerhalb des Volumens der Struktur angeordnet ist;
mindestens einer Antenne (110), die dem mindestens einen Fach zugeordnet ist; und
einer ersten elektrischen Schnittstelle;
wobei das mobile Behältnis (100) eine flexible elektromagnetische Abschirmung (112) aufweist, die mit der Struktur (102) verbunden und ausgebildet ist, elektromagnetische Störungen an der mindestens einen Antenne zu unterdrücken, wobei die elektromagnetische Abschirmung (112) ein flexibles Metallgewebe aufweist und die Struktur (102) umhüllt,
**dadurch gekennzeichnet, dass**
die elektromagnetische Abschirmung (112) einen Teil einer Staubabdeckung (116) bildet, die eine Zugangsöffnung (120) definiert, um Zugang zu dem Volumen der Struktur zu erhalten, wobei die Zugangsöffnung durch eine verschiebbare Platte (122) der Staubabdeckung verschlossen ist, und die verschiebbare Platte (122) leitend an benachbarten Platten (130, 132) der Staubabdeckung (116) befestigt ist, wenn sie sich in einer geschlossenen Position befindet; und
das Bestandsverfolgungssystem eine Andockstation (210) aufweist, mit:
einer zweiten elektrischen Schnittstelle zum Verbinden mit der ersten elektrischen Schnittstelle;
einem elektronischen Lesegerät (142), das zum Empfangen von Lesesignalen von der mindestens einen Antenne ausgebildet ist; und
einer Stromquelle (206), um zumindest das mobile Behältnis mit Strom zu versorgen.

11. Verfahren zur Bestandsverfolgung, wobei das Verfahren umfasst:
Bereitstellen eines mobilen Behältnisses (100) zur Aufnahme elektronisch etikettierter Gegenstände (108), wobei das mobile Behältnis mindestens eine Antenne (110) enthält;
wobei das Verfahren ferner umfasst:
Positionieren einer flexiblen elektromagnetischen Abschirmung (112), die ein flexibles Metallgewebe aufweist, um das mobile Behältnis (100) und die mindestens eine Antenne (110) zu umhüllen, und anschließend:
Aktivieren der mindestens einen Antenne (110) zum Abfragen der elektronisch gekennzeichneten Gegenstände (108), um ein Antennensignal zu erzeugen;
Zuführen des Antennensignals zu einem elektronischen Lesegerät (142), das von dem mobilen Behältnis (100) getrennt ist; und
Lesen des Antennensignals zur Bestimmung eines Bestand des mobilen Behältnisses, wobei
die elektromagnetische Abschirmung (112) einen Teil einer Staubabdeckung (116) bildet, die eine Zugangsöffnung (120) definiert, um Zugang zu dem Volumen der Struktur zu erhalten, wobei die Zugangsöffnung durch eine verschiebbare Platte (122) der Staubabdeckung verschlossen ist, und
die verschiebbare Platte (122) leitend an benachbarten Platten (130, 132) der Staubabdeckung (116) befestigt ist, wenn sie sich in einer geschlossenen Position befindet.

## Revendications

1. Réceptacle mobile (100) comprenant :
une structure (102) définissant un volume (104) ;
au moins une étagère (106) pour supporter des articles électroniquement marqués (108), l'étagère étant agencée à l'intérieur du volume de la structure ;
au moins une antenne (110) associée à la au moins une étagère (106) ;
le réceptacle mobile comprenant un écran électromagnétique (112) flexible associé à la structure (102) conçu pour inhiber l'interférence électromagnétique au niveau de la au moins une antenne (110), l'écran électromagnétique comprenant un tissu métallique flexible et enveloppant la structure,
**caractérisé en ce que**
l'écran électromagnétique (112) forme une partie d'un couvercle à poussière (116) qui définit une ouverture d'accès (120) pour obtenir l'accès au volume de la structure, l'ouverture d'accès étant fermée par un panneau déplaçable (122) du couvercle à poussière, et
le panneau déplaçable (122) étant fixé de manière conductrice aux panneaux adjacents (130, 132) du couvercle à poussière (116) lorsqu'il se trouve dans une position fermée.

2. Réceptacle selon la revendication 1, dans lequel la structure (102) comprend un châssis (114) qui supporte la au moins une étagère (106).

3. Réceptacle selon la revendication 1 ou 2, le tissu métallique flexible comprenant un matériau sélectionné dans le groupe constitué : d'une maille tissée métallique, d'un film métallique, de fibres revêtues de métal, de nylon revêtu d'argent, de rayonne revêtue d'argent, de nylon revêtu de cuivre, et de leurs combinaisons.

4. Réceptacle selon l'une quelconque des revendications précédentes, la au moins une antenne (110) comprenant deux ou plusieurs bobines d'antenne (202) indépendantes.

5. Réceptacle selon la revendication 4, comprenant en outre un premier multiplexeur (204) qui effectue l'interface avec les deux ou plusieurs bobines d'antenne (202).

6. Réceptacle selon la revendication 5, comprenant en outre :
au moins deux étagères (106) ;
des antennes où au moins une antenne (110) est associée à une étagère des au moins deux étagères (106) ; et
une interface d'antenne conçue pour effectuer une interface avec un lecteur électronique (142) par l'intermédiaire d'un second multiplexeur (144) qui interroge séquentiellement les antennes des au moins deux étagères (106).

7. Réceptacle selon la revendication 6, comprenant en outre le second multiplexeur (144).

8. Réceptacle selon la revendication 6 ou 7, l'interface d'antenne étant conçue :
pour recevoir un signal de lecture de la part du lecteur électronique (142) lorsque l'interface d'antenne se trouve en communication avec le lecteur électronique, et
pour fournir le signal de lecture à chaque antenne de sorte que les articles électroniquement marqués sur l'étagère associée à cette antenne sont lus pour identification.

9. Réceptacle selon l'une quelconque des revendications précédentes comprenant en outre une interface d'alimentation pour recevoir de l'énergie d'une alimentation d'énergie externe (206) lorsque les articles électroniquement marqués sont lus pour identification.

10. Système de suivi d'inventaire (200) comprenant :
un réceptacle mobile (100) comprenant :
une structure (102) définissant un volume (104) ;
au moins une étagère (106) pour supporter des articles électroniquement marqués (108), l'étagère étant agencée à l'intérieur du volume de la structure ;
au moins une antenne (110) associée à la au moins une étagère ; et
une première interface électrique ;
le réceptacle mobile (100) comprenant un écran électromagnétique (112) flexible associé à la structure (102) et conçu pour inhiber l'interférence électromagnétique au niveau de la au moins une antenne (110), l'écran électromagnétique (112) comprenant un tissu métallique flexible et enveloppant la structure (102),
**caractérisé en ce que**
l'écran électromagnétique (112) forme une partie d'un couvercle à poussière (116) qui définit une ouverture d'accès (120) pour obtenir un accès au volume de la structure, l'ouverture d'accès étant fermée par un panneau déplaçable (122) du couvercle à poussière, et
le panneau déplaçable (122) étant fixé de manière conductrice aux panneaux adjacents (130, 132) du couvercle à poussière (116) lorsqu'il se trouve dans une position fermée ; et
le système de suivi d'inventaire comprenant un poste de charge (210) comprenant :
une seconde interface électrique pour l'interface avec la première interface électrique ;
un lecteur électronique (142) conçu pour recevoir des signaux de lecture de la au moins une antenne ; et
une source d'alimentation (206) pour fournir de l'énergie au moins au réceptacle mobile.

11. Procédé de suivi d'inventaire, le procédé comprenant :
La fourniture d'un réceptacle mobile (100) pour supporter des articles électroniquement marqués (108), le réceptacle mobile contenant au moins une antenne (110) ;
le procédé comprenant en outre :
le positionnement d'un écran électromagnétique (112) flexible comprenant un tissu métallique flexible pour envelopper le réceptacle mobile (100) et la au moins une antenne (110), et ensuite : l'activation de la au moins une antenne (110) pour interroger les articles électroniquement marqués (108) afin de générer un signal d'antenne ;
la fourniture du signal d'antenne à un lecteur électronique (142) qui est séparé du réceptacle mobile (100) ; et
la lecture du signal d'antenne pour déterminer un inventaire du réceptacle mobile,
l'écran électromagnétique (112) formant une partie d'un couvercle à poussière (116) qui définit une ouverture d'accès (120) pour obtenir un accès au volume de la structure, l'ouverture d'accès étant fermée par un panneau déplaçable (122) du couvercle à poussière, et
le panneau déplaçable (122) étant fixé de manière conductrice aux panneaux adjacents (130, 132) du couvercle à poussière (116) lorsqu'il se trouve dans une position fermée.
